# EUROPEAN PATENT SPECIFICATION

(11) **EP 2 784 754 B1**
(45) Date of publication and mention of the grant of the patent: **04.05.2016**
(21) Application number: 13175005.1
(22) Date of filing: 04.07.2013
(51) Int. Cl.: G07C 9/00, B60R 25/20

(54) **Hands-free system and method for opening trunk**
Freihändiges System und Verfahren zum Öffnen des Kofferraums
Système mains-libres et procédé d'ouverture de coffre

(30) Priority: 28.03.2013 KR 20130033653
(43) Date of publication of application: 01.10.2014
(73) Proprietor: HYUNDAI MOTOR COMPANY, Seoul 137-938 (KR); KIA MOTORS CORPORATION, Seoul 137-938 (KR)
(72) Inventor: Kim, Jong Gyu, 407-785 Incheon (KR)
(74) Representative: Isarpatent

(56) References cited:
- EP-A1- 1 143 092
- WO-A1-2004/100081
- US-A- 4 973 958
- US-A1- 2010 077 804

## Description

The present invention relates to hands-free system for opening a trunk.

WO 2004/100081 A1 discloses an access authorization system for vehicles comprising at least one keyless go key for transmitting an authentication code in a bi-directional dialogue with a transceiver unit arranged inside the vehicle. According to prior art keyless go locking systems, actuation of vehicle doors or the rear flap is enabled, i.e. they are unlocked, once an authorized keyless go key is detected. The aim of the invention is to provide an access authorization system for vehicles that allows for an improved ease of operation. According to the invention, the system, in addition to the keyless go key, is provided with a transponder which transmits a code signal comprising an access code that is compared with an access code deposited in an assignment memory on the vehicle side. The access codes deposited in said assignment memory are assigned to a definite, movably hinged vehicle part. If the access code transmitted by the transponder matches one of these deposited access codes, the vehicle part, for example a vehicle door or trunk lid, assigned to the specific access code is automatically opened or closed.

### (b) Background Art

Recently, vehicles provide various remote services via smart keys which allow services such as remote start, door control, and keyless start.

When holding multiple objects with both hands, a user has to put down the objects to open the trunk or tail gate of a vehicle and thus, there a technical attempt has been developed to provide convenience by automatically finding the user's intention to open a trunk and opening the trunk in advance to reduce the inconvenience.

A known technology that is generally used is to recognize that a driver behind a tailgate (e.g., trunk) positions a foot (or other object) under the bumper of a vehicle, uses a sensor on a bottom of the vehicle, requests an existing smart key system to authenticate the user, and opens a trunk by giving an instruction to open a tailgate when the smart key system authenticates the driver.

### SUMMARY

The present invention provides a hands-free system and method for opening a trunk by automatically finding an intention while maintaining safety based on a specific door that is the trunk, as defined by independent claim 1.

The controller may be configured to transmit an off-signal via the trunk antenna, when determined that the trunk is open after outputting the trunk opening signal, while the smart key may delete the stored hands-free function setting when receiving the off-signal. When it is unclear that the trunk is open after the trunk opening signal is output, the controller may be configured to operate the trunk antenna to transmit a sensing signal again during a predetermined period.

In addition, the controller may be configured to operate the trunk antenna to transmit an authentication signal again, when the receiving antenna fails to receive an authentication response signal within a predetermined time. When the receiving antenna fails to receive an authentication response signal within a predetermined time even though an authentication was transmitted again, the controller may be configured to operate the trunk antenna to transmit a sensing signal during a predetermined period.

When a sensing response signal is received from the point of time that the trunk antenna starts to transmit a sensing signal, and sensing response signals are continuously received for a predetermined time or a predetermined number of times, the controller may be configured to perform authentication by transmitting an authentication signal and receiving an authentication response signal, and then stop transmission of a sensing signal when the authentication is allowed.

When the function setting information is included in the sensing response signal received simultaneously with the stop of transmission of a sensing signal, the controller may be configured to transmit an off-signal via the trunk antenna and the smart key may delete the stored hands-free function setting when receiving the off-signal.

When the receiving antenna receives sensing response signals without the function setting information for a predetermined time or a predetermined number of times, the controller may be configured to transmit an authentication signal, receive an authentication response signal, and perform authentication, and then stop transmission of a sensing signal when the authentication is allowed.

When receiving a sensing response signal including the function setting information, the controller may be configured to output an alarm signal, output an alarm signal during a predetermined period while a sensing response signal including the function setting information is received a predetermined time, and output an alarm signal when outputting a trunk opening signal.

When sensing response signals transmitted from the smart keys are received, the controller may be configured to authenticate the smart key corresponding to the sensing response signal including the function setting information and output a trunk opening signal. In addition, when sensing response signals transmitted from the smart keys are received and all of sensing response signals include the function setting information, the controller may be configured to authenticate the smart key primarily transmitting the sensing response signal and output a trunk opening signal.

Further, the present invention provides a hands-free method of opening a trunk using the hands-free system for opening a trunk, which may include: a sensing step of transmitting, by a controller, a sensing signal during a predetermined period from a trunk antenna; a storing step of storing a hands-free function setting in a smart key when the setting is performed on the smart key; a responding step of transmitting a corresponding sensing response signal via the smart key when receiving the sensing signal from the trunk antenna on the smart key and transmitting a sensing response signal with a function setting information when the hands-free function is set up on the smart key; an entering step of transmitting, by the controller, an authentication signal via the trunk antenna when receiving the sensing response signal including the function setting information a predetermined number of times via the receiving antenna; an authenticating step of transmitting a corresponding authentication response signal via the smart key when receiving the authentication signal on the smart key; and an opening step of performing, by the controller, authentication when the receiving antennal receives the authentication response signal, and outputting a trunk opening signal when the authentication is allowed.

According to the hands-free system and method for opening a trunk which have the configuration as described above, it may be possible to enhance stability and security for opening the trunk, by setting the opening conditions of a trunk such that the trunk is opened only when authentication is satisfied within a predetermined sensing area and for a predetermined sensing time.

Further, stability of the system may be ensured and malfunction may be reduced by opening a trunk only when a smart key is in the vicinity of the trunk. In addition, the user may easily recognize the operational steps and open of the trunk, by giving the alarm function, and it may be possible to reliably monitor the opening of the trunk by deleting the record of a setting in the smart key only when the smart key has been authenticated and it is determined that the trunk is open. It may be possible to prevent the trunk from unexpectedly opening and the battery of the smart key from being discharged, by giving the away-function. Further, in the plurality of smart keys approach the vicinity of a vehicle, the trunk may be stably opened without a system error (e.g., with minimal system error).

### BRIEF DESCRIPTION OF THE DRAWINGS

The above and other features of the present invention will now be described in detail with reference to exemplary embodiments thereof illustrated the accompanying drawings which are given herein below by way of illustration only, and thus are not limitative of the present invention, and wherein:
FIG. 1 is an exemplary schematic diagram illustrating the configuration of a hands-free system for opening a trunk;
FIG. 2 is an exemplary flowchart illustrating a hands-free method for opening a trunk;
FIG. 3 is an exemplary diagram illustrating a process of transmitting signals in the hands-free system for opening a trunk shown in FIG. 1;
FIG. 4 is an exemplary diagram illustrating processes of sensing and authenticating in the hands-free system for opening a trunk shown in FIG. 1; and
FIGS. 5 and 6 are exemplary diagrams illustrating an away-function of the hands-free system for opening a trunk shown in FIG. 1.

It should be understood that the accompanying drawings are not necessarily to scale, presenting a somewhat simplified representation of various exemplary features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Additionally, it is understood that the term controller refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Hands-free system and method for opening a trunk according to an embodiment of the present invention are described hereinafter with reference to the accompanying drawings.

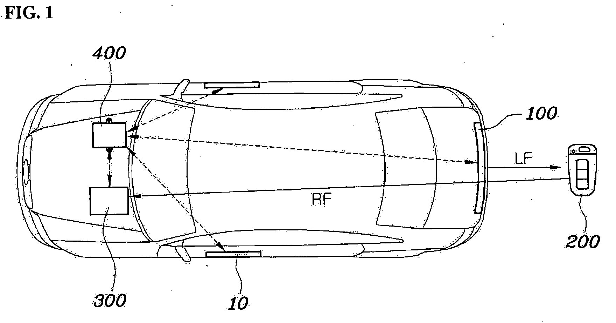

FIG. 1 is an exemplary schematic diagram illustrating the configuration of a hands-free system for opening a trunk. The hands-free system for opening a trunk may include: a trunk antenna 100 disposed at the trunk of a vehicle and configured to transmit a sensing signal or an authentication signal; a smart key 200 configured to transmit a sensing response signal or an authentication response signal, in response to receiving a sensing signal or an authentication signal from the trunk antenna 100, and configured to receive and store a hands-free function setting, and transmit the sensing response signal with function setting information when the hands-free function is set; a receiving antenna 300 configured to receive a sensing response signal or an authentication response signal from the smart key 200; and a controller 400 configured to operate the trunk antenna 100 to transmit an authentication signal, when the trunk antenna 100 transmits a sensing signal during a predetermined period and the receiving antenna 300 receives a sensing response signal including function setting information a predetermined number of times, the controller may be configured to perform authentication when the receiving antenna 300 receives an authentication response signal, and output a trunk opening signal, when the authentication is allowed.

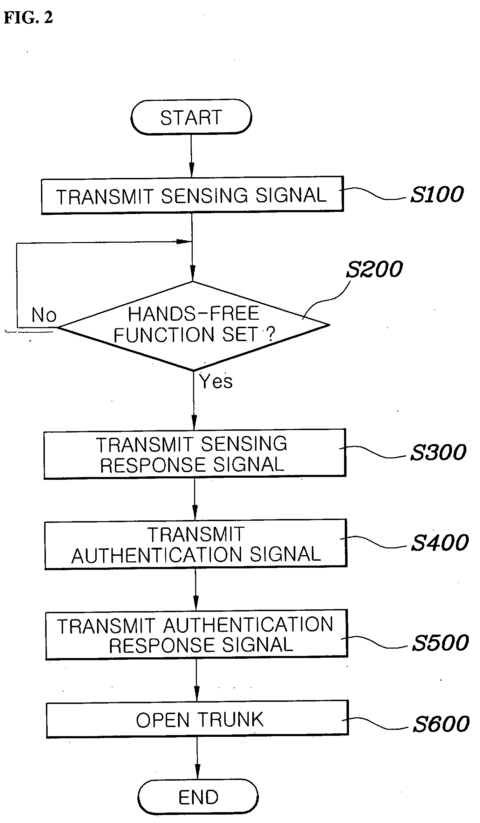

On the other hand, FIG. 2 is an exemplary flowchart illustrating a hands-free method of opening a trunk. The hands-free method of opening a trunk may include: transmitting, by a controller, a sensing signal during a predetermined period from a trunk antenna(S100); storing, by the controller, a hands-free function setting in a smart key when the set-up is performed on the smart key(S200); transmitting, by the controller, a corresponding sensing response signal via the smart key when receiving the sensing signal from the trunk antenna on the smart key and transmitting a sensing response signal with a function setting information when the hands-free function is set up on the smart key(S300); transmitting, by the controller, an authentication signal via the trunk antenna in response to receiving the sensing response signal that includes the function setting information a predetermined number of times via the receiving antenna(S400); transmitting, by the controller, a corresponding authentication response signal via the smart key in response to receiving the authentication signal on the smart key(S500); and performing, by the controller, authentication when the receiving antennal receives the authentication response signal, and outputting, by the controller, a trunk opening signal when the authentication is allowed(S600).

In particular, the hands-free system for opening a trunk according to an exemplary embodiment of the present invention may include the smart key 200, and the trunk antenna 100, the receiving antenna 300, and the controller 400 within a vehicle. The operation of trunk antenna 100 and the receiving antenna 300 may be operated by the controller 400 within a vehicle.

First, a user may set-up/release a trunk hands-free opening function on the smart key 200. This operation may be easily performed by operating buttons on the smart key 200. In addition, each door of a vehicle may be equipped with a LF (Low Frequency) antenna 10 configured to detect the smart key 200.

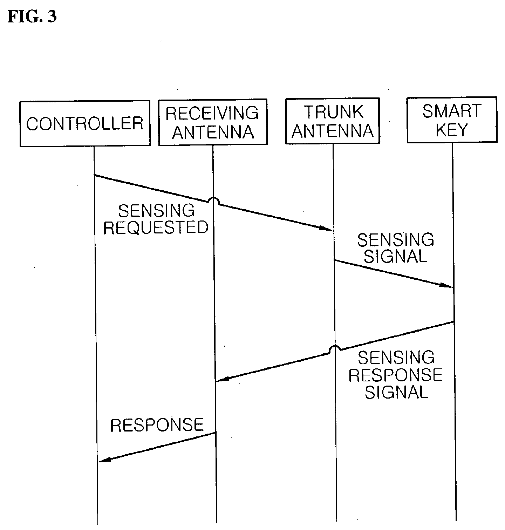

FIG. 3 is an exemplary diagram illustrating a process of transmitting signals in the hands-free system for opening a trunk shown in FIG. 1, in which the controller 400 within a vehicle may be configured to operate the trunk antenna 100 to perform sensing. Then the trunk antenna 100 may be configured to transmit an LF signal there around. The transmission range of the LF signal may be determined to transmit a sensing signal to the smart key 200 within a predetermined radius from the trunk during a predetermined period.

When the smart key 200 is within a predetermined distance to the trunk and senses a sensing signal, a sensing response signal may be transmitted as an RF (Radio Frequency) signal to the vehicle. In this case, the receiving antenna 300 within the vehicle may be configured to receive the RF signal and transmit the RF signal to the controller 400, and thus the controller 400 may be configured to detect the smart key 200 in the vicinity of the trunk. The use of an LF signal for the signal to be transmitted from the vehicle to the smart key 200 and an RF signal for the signal to be transmitted to the vehicle from the smart key 200 may allow a reduction in interference between the signals and increased strength against noise.

The doors of the vehicle may each have an ID and the LF antennas on the doors may attach the door ID into a sensing signal, and the smart key 200 may be configured transmit a sensing response signal that includes the information in response to the sensing signal from which door the ID belongs. For example, when the trunk antenna 100 transmits a sensing signal of ID:3 and the smart key 200 receives the signal, a sensing response signal that includes the information on the ID:3 may be transmitted allowing the controller 400 to detect the smart key 200 in a predetermined vicinity of the vehicle. Therefore, when an antenna 10 on a door of the vehicle sends out a sensing signal of ID:2, the controller may be configured to detect that a sensing response signal for the sensing signal is related to ID:2, and thus, the system may be configured to recognize that a user is in the vicinity of the door instead of the trunk, and may not perform the hands-free trunk opening function.

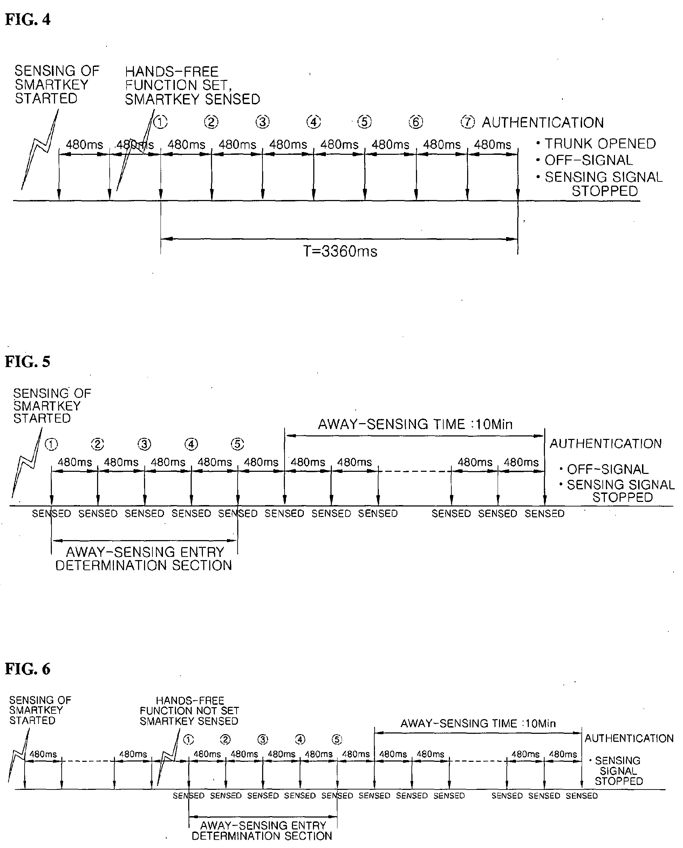

FIG. 4 is an exemplary diagram illustrating processes of sensing and authenticating in the hands-free system for opening a trunk shown in FIG. 1, in which the trunk antenna 100 may be configured to transmit a sensing signal during a predetermined period. When the smart key 200 approaches the trunk, the smart key 200 may be configured to receive a sensing signal and transmit a sensing response signal to the receiving antenna 300 of the vehicle. When a user sets up a hands-free function via buttons on the smart key 200, the smart key 200 may be configured to store the function setting, and in response receiving a sensing signal, the smart key 200 may be configured to transmit a sensing response signal wherein the function setting information may be included in the sensing response signal.

In particular, the controller 400 may be configured to count the following events of sensing, assuming that the user who wants hands-free opening is in the vicinity of the trunk. In other words, when the receiving antenna 300 receives sensing response signals that include the function setting information a predetermined number of times, the trunk antenna 100 may be configured to transmit an authentication signal.

As shown in the figure, when sensing occurs seven times (e.g., a sensing signal and a sensing response signal are transmitted and received seven times), the user's intention to open the trunk may be confirmed and authentication may be performed. Therefore, when sensing occurs less than seven times, e.g., only three times, it may be determined that the user left and the trunk may remain closed, thereby satisfying the user's intention and maintaining the vehicle security.

In the authentication, first, the trunk antenna 100 may be configured to transmit an authentication signal and the smart key 200 may be configured to transmit an authentication response signal including a password etc. in response to the request. When the receiving antenna 300 receives the authentication response signal, the controller 400 may be configured to perform authentication, and when the authentication is allowed, the controller may be configured to output a trunk opening signal, to unlock the trunk latchet and open the trunk.

Further, the controller 400 may be configured to transmit an off-signal via the trunk antenna 100, in response to determining that the trunk is open after outputting the trunk opening signal, while the smart key 200 may be configured to delete the setting of the stored hands-free function in response to receiving the off-signal, to prevent the battery of the smart key 200 from being discharged due to unnecessary continuous sending-out of sensing response signals.

When it is unclear that the trunk is open after the trunk opening signal is outputted, the controller 400 may be configured to operate the trunk antenna 100 to transmit a sensing signal again during a predetermined period. In other words, when the trunk is not opened by a physical break, sensing may be performed again from the first step.

Further, the controller 400 may be configured to operate the trunk antenna 100 to transmit an authentication signal again, when the receiving antenna 300 fails to receive an authentication response signal within a predetermined time. In other words, when an authentication response signal is not received within a predetermined time due to communication noise, it may be considered that there was sensing but authentication was not allowed, and thus, an authentication signal may be transmitted again to the smart key 200.

When the receiving antenna 300 fails to receive an authentication response signal within a predetermined time even though an authentication was transmitted again, the controller 400 may be configured to operate the trunk antenna 100 to transmit a sensing signal during a predetermined period. In other words, the smart key 200 may be determined to be beyond a vicinity range from the vehicle in the authentication process, and the process may restart from the sensing.

When a sensing response signal is received from the point of time that the trunk antenna 100 begins to transmit a sensing signal, and sensing response signals are continuously received for a predetermined time or a predetermined number of times, the controller 400 may be configured to perform authentication by transmitting an authentication signal and may be configured to receive an authentication response signal, and then cease transmission of a sensing signal when the authentication is allowed.

This case is shown in FIG. 5 and referred to as an away-function. In other words, it may be assumed that the smart key 200 is positioned in the vicinity of the vehicle and it may be typical that the user places a bag in the vicinity of the trunk. In this case, the smart key 200 may be configured to transmit a sensing response signal from when primarily receiving a sensing signal. Further, entering the away-function may be determined under the assumption that the smart key 200 was in the vicinity of the trunk, for example, when sensing is performed five times and a sensing response signal is received three or more times. In particular, when sensing signals and sensing response signals are continuously transmitted and received for 10 minutes and the smart key 200 remains within the vicinity of the trunk for the 10 minutes, it may be determined that the user left away and the smart key 200 may be authenticated. When the smart key is authenticated, an off-signal may be transmitted to the smart key 200 and the hands-free function setting stored in the smart key 200 may be deleted, and transmission of a sensing signal may be stopped, thereby preventing the battery of the smart key 200 from being discharged.

In other words, when the function setting information is included in the sensing response signal received simultaneously with the stop of transmission of a sensing signal, the controller 400 may be configured to transmit an off-signal via the trunk antenna 100 and the smart key 200 may be configured to delete the stored hands-free function setting in response to receiving the off-signal.

In the case of FIG. 6, when the receiving antenna 300 receives sensing response signals without the function setting information for a predetermined time or a predetermined number of times, the controller 400 may be configured to transmit an authentication signal, receive an authentication response signal, and perform authentication, and then cease transmission of a sensing signal when the authentication is allowed. In other words, when the smart key 200 is sensed but a sensing response signal without the function setting information is received, in which when the sensing response signals are continuously received for 10 minutes, it may be determined that the user left away. Further, in accordance with the away-function, authentication may be performed, and when the authentication is allowed, transmission of a sensing signal may be ceased and the battery of the smart key 200 may be prevented from being discharged.

When receiving a sensing response signal that includes the function setting information, the controller 400 may be configured to output an alarm signal, output an alarm signal during a predetermined period while a sensing response signal that includes the function setting information may be received a predetermined number of times, and output an alarm signal when outputting a trunk opening signal.

In other words, when receiving a sensing response signal that includes the function setting information, the controller may be configured to notify the user that the hands-free function is started, by outputting an alarm signal, notify the user that hands-free recognition is in operation by outputting an alarm signal during a predetermined period while a sensing response signal that includes the function setting information is received a predetermined number of times (e.g., the controller may be configured to transmit an alarm signal three times while a sensing signal and a sensing response signal are transmitted and received seven times), and notify the user that the trunk opens by outputting an alarm signal, when outputting a trunk opening signal, to prevent the user from hitting against the trunk. This function, allows a notification that the hands-free function is in good (e.g., operable) condition to be sent and the danger of an accident due to malfunction may be prevented, and thus the user may be protected.

According to an embodiment of the invention a plurality of smart keys 200 each having an ID may be provided and the information on the IDs may be included in a sensing response signal or an authentication response signal.

## Claims

1. A hands-free system for opening a trunk, comprising:
a trunk antenna (100) disposed at the trunk of a vehicle and configured to transmit a sensing signal or an authentication signal;
a plurality of smart keys (200) each housing an ID configured to:
transmit a sensing response signal or an authentication response signal, in response to receiving a sensing signal or an authentication signal from the trunk antenna (100);
receive and store a hands-free function setting; and
transmit the sensing response signal with function setting information when the hands-free function is set;
a receiving antenna (300) configured to receive a sensing response signal or an authentication response signal from the smart keys (200); and
a controller (400) configured to:
transmit an authentication signal via the trunk antenna (100), when the trunk antenna (100) transmits a sensing signal during a predetermined period and the receiving antenna (300) receives a sensing response signal that includes function setting information a predetermined number of times;
perform authentication when the receiving antenna (300) receives an authentication response signal; and
output a trunk opening signal, when the authentication is allowed,
wherein information on the IDs is included in said sensing response signal or said authentication response signal.

2. The system of claim 1, wherein the controller (400) is further configured to transmit an off-signal via the trunk antenna (100), in response to determining that the trunk is open after outputting the trunk opening signal, and the smart key (200) is further configured to delete the stored hands-free function setting in response to receiving the off-signal.

3. The system of claim 1, wherein the controller (400) is further configured to:
operate the trunk antenna (100) to transmit a sensing signal again for a predetermined period if is unknown whether the trunk is open after the trunk opening signal is outputted.

4. The system of claim 1, wherein the controller (400) is further configured to operate the trunk antenna (100) to transmit an authentication signal again, when the receiving antenna (300) fails to receive an authentication response signal within a predetermined time.

5. The system of claim 4, wherein the controller (400) is further configured to operate the trunk antenna (100) to transmit a sensing signal at a predetermined period when the receiving antenna (300) fails to receive an authentication response signal within a predetermined time even though an authentication was transmitted again.

6. The system of claim 1, wherein the controller (400) is further configured to:
perform authentication by transmitting an authentication signal and receiving an authentication response signal; and
cease transmission of a sensing signal when the authentication is allowed, when a sensing response signal is received from the point of time that the trunk antenna (100) begins to transmit a sensing signal, and sensing response signals are continuously received for a predetermined time or a predetermined number of times.

7. The system of claim 6, wherein the controller (400) is further configured to transmit an off-signal via the trunk antenna (100) and the smart key (200) is further configured to delete the stored hands-free function setting when receiving the off-signal, when the function setting information is included in the sensing response signal received simultaneously with the cease of transmission of a sensing signal.

8. The system of claim 1, wherein the controller (400) is further configured to:
transmit an authentication signal;
receive an authentication response signal;
perform authentication; and
cease transmission of a sensing signal when the authentication is allowed when the receiving antenna (300) receives sensing response signals without the function setting information for a predetermined time or a predetermined number of times.

9. The system of claim 1, wherein the controller (400) is further configured to:
output an alarm signal;
output an alarm signal at a predetermined period while a sensing response signal that includes the function setting information is received a predetermined time; and
output an alarm signal when outputting a trunk opening signal when receiving a sensing response signal that includes the function setting information.

10. The system of claim 1, wherein the controller (400) is further configured to authenticate the smart key (200) that corresponds to the sensing response signal that includes the function setting information and output a trunk opening signal when sensing response signals transmitted from the smart keys are received.

11. The system of claim 1, wherein the controller (400) is further configured to authenticate the smart key (200) primarily transmitting the sensing response signal and output a trunk opening signal when sensing response signals transmitted from the smart key is received and the sensing response signals includes the function setting information.

## Patentansprüche

1. Freihandsystem zum Öffnen eines Kofferraums, das Folgendes umfasst:
eine Kofferraumantenne (100), die am Kofferraum eines Fahrzeugs angeordnet ist und dafür ausgebildet ist, ein Lesesignal oder ein Authentifizierungssignal zu senden;
mehrere intelligente Schlüssel (200), die jeweils eine ID enthalten und für Folgendes ausgebildet sind:
Senden eines Leseantwortsignals oder eines Authentifizierungsantwortsignals in Reaktion auf das Empfangen eines Lesesignals oder eines Authentifizierungssignals von der Kofferraumantenne (100);
Empfangen und Speichern einer Freihandfunktionseinstellung; und
Senden des Leseantwortsignals mit Funktionseinstellungsinformationen, wenn die Freihandfunktion eingestellt ist;
eine Empfangsantenne (300), die dafür ausgebildet ist, ein Leseantwortsignal oder ein Authentifizierungsantwortsignal von dem intelligenten Schlüssel (200) zu empfangen; und
eine Steuereinheit (400), die für Folgendes ausgebildet ist:
Senden eines Authentifizierungssignals über die Kofferraumantenne (100), wenn die Kofferraumantenne (100) ein Lesesignal während einer vorgegebenen Zeitraums sendet und die Empfangsantenne (300) ein Leseantwortsignal, das Funktionseinstellungsinformationen enthält, eine vorgegebene Anzahl von Malen empfängt;
Ausführen einer Authentifizierung, wenn die Empfangsantenne (300) ein Authentifizierungsantwortsignal empfängt; und
Ausgeben eines Kofferraumöffnungssignals, wenn die Authentifizierung zugelassen wird,
wobei Informationen über die IDs in dem Leseantwortsignal oder in dem Authentifizierungsantwortsignal enthalten sind.

2. System nach Anspruch 1, wobei die Steuereinheit (400) des Weiteren dafür ausgebildet ist, ein Aus-Signal über die Kofferraumantenne (100) zu senden, wenn bestimmt wurde, dass der Kofferraum offen ist, nachdem das Kofferraumöffnungssignal ausgegeben wurde, und der intelligente Schlüssel (200) des Weiteren dafür ausgebildet ist, die gespeicherte Freihandfunktionseinstellung in Reaktion auf das Empfangen des Aus-Signals zu löschen.

3. System nach Anspruch 1, wobei die Steuereinheit (400) des Weiteren für Folgendes ausgebildet ist:
Veranlassen der Kofferraumantenne (100), ein Lesesignal über einen vorgegebenen Zeitraum erneut zu senden, wenn unbekannt ist, ob der Kofferraum offen ist, nachdem das Kofferraumöffnungssignal ausgegeben wurde.

4. System nach Anspruch 1, wobei die Steuereinheit (400) des Weiteren dafür ausgebildet ist, die Kofferraumantenne (100) zu veranlassen, ein Authentifizierungssignal erneut zu senden, wenn die Empfangsantenne (300) innerhalb einer vorgegebenen Zeit kein Authentifizierungsantwortsignal empfängt.

5. System nach Anspruch 4, wobei die Steuereinheit (400) des Weiteren dafür ausgebildet ist, die Kofferraumantenne (100) zu veranlassen, ein Lesesignal in einem vorgegebenen Zeitraum zu senden, wenn die Empfangsantenne (300) innerhalb einer vorgegebenen Zeit kein Authentifizierungsantwortsignal empfängt, selbst wenn erneut eine Authentifizierung gesendet wurde.

6. System nach Anspruch 1, wobei die Steuereinheit (400) des Weiteren für Folgendes ausgebildet ist:
Ausführen einer Authentifizierung durch Senden eines Authentifizierungssignals und Empfangen eines Authentifizierungsantwortsignals; und
Beenden des Sendens eines Lesesignals, wenn die Authentifizierung zugelassen wird, wenn ein Leseantwortsignal ab dem Zeitpunkt empfangen wird, wo die Kofferraumantenne (100) beginnt, ein Lesesignal zu senden, und Leseantwortsignale kontinuierlich über eine vorgegebene Zeit oder eine vorgegebene Anzahl von Malen empfangen werden.

7. System nach Anspruch 6, wobei die Steuereinheit (400) des Weiteren dafür ausgebildet ist, ein Aus-Signal über die Kofferraumantenne (100) zu senden, und der intelligente Schlüssel (200) des Weiteren dafür ausgebildet ist, die gespeicherte Freihandfunktionseinstellung zu löschen, wenn das Aus-Signal empfangen wird, wenn die Funktionseinstellungsinformationen in dem Leseantwortsignal enthalten sind, das gleichzeitig mit dem Beenden des Sendens eines Lesesignals empfangen wird.

8. System nach Anspruch 1, wobei die Steuereinheit (400) des Weiteren für Folgendes ausgebildet ist:
Senden eines Authentifizierungssignals;
Empfangen eines Authentifizierungsantwortsignals;
Ausführen einer Authentifizierung; und
Beenden des Sendens eines Lesesignals, wenn die Authentifizierung zugelassen wird, wenn die Empfangsantenne (300) Leseantwortsignale ohne die Funktionseinstellungsinformationen über eine vorgegebene Zeit oder eine vorgegebene Anzahl von Malen empfängt.

9. System nach Anspruch 1, wobei die Steuereinheit (400) des Weiteren für Folgendes ausgebildet ist:
Ausgeben eines Alarmsignals;
Ausgeben eines Alarmsignal in einem vorgegebenen Zeitraums, während ein Leseantwortsignal, das die Funktionseinstellungsinformationen enthält, zu einer vorgegebenen Zeit empfangen wird; und
Ausgeben eines Alarmsignals, wenn ein Kofferraumöffnungssignal ausgegeben wird, wenn ein Leseantwortsignal empfangen wird, das die Funktionseinstellungsinformationen enthält.

10. System nach Anspruch 1, wobei die Steuereinheit (400) des Weiteren dafür ausgebildet ist, den intelligenten Schlüssel (200) zu authentifizieren, der dem Leseantwortsignal entspricht, das die Funktionseinstellungsinformationen enthält, und ein Kofferraumöffnungssignal auszugeben, wenn Leseantwortsignale empfangen werden, die von den intelligenten Schlüsseln gesendet wurden.

11. System nach Anspruch 1, wobei die Steuereinheit (400) des Weiteren dafür ausgebildet ist, den intelligenten Schlüssel (200) zu authentifizieren, der das Leseantwortsignal überwiegend sendet, und ein Kofferraumöffnungssignal auszugeben, wenn Leseantwortsignale, die von dem intelligenten Schlüssel gesendet wurden, empfangen werden und die Leseantwortsignale die Funktionseinstellungsinformationen enthalten.

## Revendications

1. Système mains libres pour ouvrir un coffre, comprenant :
une antenne de coffre (100) disposée au niveau du coffre d'un véhicule et configurée pour émettre un signal de détection ou un signal d'authentification;
une pluralité de clés à puce (200) logeant chacune un identificateur, configurées pour :
émettre un signal de réponse de détection ou un signal de réponse d'authentification en réponse à la réception d'un signal de détection ou d'un signal d'authentification à partir de l'antenne de coffre (100);
recevoir et stocker un réglage de fonction mains libres; et
émettre le signal de réponse de détection avec des informations de réglage de fonction lorsque la fonction mains libres est réglée;
une antenne de réception (300) configurée pour recevoir un signal de réponse de détection ou un signal de réponse d'authentification à partir des clés à puce (200); et
un contrôleur (400) configuré pour :
émettre un signal d'authentification par l'intermédiaire de l'antenne de coffre (100) lorsque l'antenne de coffre (100) émet un signal de détection pendant une période prédéterminée et l'antenne de réception (300) reçoit un signal de réponse de détection qui comprend des informations de réglage de fonction un nombre de fois prédéterminé;
effectuer une authentification lorsque l'antenne de réception (300) reçoit un signal de réponse d'authentification; et
fournir un signal d'ouverture du coffre lorsque l'authentification est autorisée,
dans lequel des informations sur les identificateurs sont incluses dans ledit signal de réponse de détection ou ledit signal de réponse d'authentification.

2. Système selon la revendication 1, dans lequel le contrôleur (400) est en outre configuré pour émettre un signal d'arrêt par l'intermédiaire de l'antenne de coffre (100) en réponse à la détermination que le coffre est ouvert après avoir fourni le signal d'ouverture du coffre, et la clé à puce (200) est en outre configurée pour supprimer le réglage de fonction mains libres stocké en réponse à la réception du signal d'arrêt.

3. Système selon la revendication 1, dans lequel le contrôleur (400) est en outre configuré pour :
faire fonctionner l'antenne de coffre (100) pour émettre à nouveau un signal de détection pendant une période prédéterminée si l'on ignore si le coffre est ouvert après que le signal d'ouverture du coffre est fourni.

4. Système selon la revendication 1, dans lequel le contrôleur (400) est en outre configuré pour faire fonctionner l'antenne de coffre (100) pour émettre à nouveau un signal d'authentification lorsque l'antenne de réception (300) ne parvient pas à recevoir un signal de réponse d'authentification dans un temps prédéterminé.

5. Système selon la revendication 4, dans lequel le contrôleur (400) est en outre configuré pour faire fonctionner l'antenne de coffre (100) pour émettre un signal de détection à une période prédéterminée lorsque l'antenne de réception (300) ne parvient pas à recevoir un signal de réponse d'authentification dans un temps prédéterminé, même si une authentification a été transmise à nouveau.

6. Système selon la revendication 1, dans lequel le contrôleur (400) est en outre configuré pour :
effectuer une authentification en émettant un signal d'authentification et en recevant un signal de réponse d'authentification; et
cesser l'émission d'un signal de détection lorsque l'authentification est autorisée, lorsqu'un signal de réponse de détection est reçu à partir du moment où l'antenne de coffre (100) commence à émettre un signal de détection et des signaux de réponse de détection sont reçus en continu pendant un temps prédéterminé ou un nombre de fois prédéterminé.

7. Système selon la revendication 6, dans lequel le contrôleur (400) est en outre configuré pour émettre un signal d'arrêt par l'intermédiaire de l'antenne de coffre (100) et la clé à puce (200) est en outre configurée pour supprimer le réglage de fonction mains libres stocké lors de la réception du signal d'arrêt lorsque les informations de réglage de fonction sont incluses dans le signal de réponse de détection reçu en même temps que la cessation d'émission d'un signal de détection.

8. Système selon la revendication 1, dans lequel le contrôleur (400) est en outre configuré pour :
émettre un signal d'authentification;
recevoir un signal de réponse d'authentification;
effectuer une authentification; et
cesser l'émission d'un signal de détection lorsque l'authentification est autorisée lorsque l'antenne de réception (300) reçoit des signaux de réponse de détection sans les informations de réglage de fonction pendant un temps prédéterminé ou un nombre de fois prédéterminé.

9. Système selon la revendication 1, dans lequel le contrôleur (400) est en outre configuré pour :
fournir un signal d'alarme;
fournir un signal d'alarme à une période prédéterminée tandis qu'un signal de réponse de détection qui inclut les informations de réglage de fonction est reçu à un moment prédéterminé; et
fournir un signal d'alarme lors de la fourniture d'un signal d'ouverture du coffre lors de la réception d'un signal de réponse de détection qui inclut les informations de réglage de fonction.

10. Système selon la revendication 1, dans lequel le contrôleur (400) est en outre configuré pour authentifier la clé à puce (200) qui correspond au signal de réponse de détection qui inclut les informations de réglage de fonction et fournir un signal d'ouverture du coffre lorsque des signaux de réponse de détection transmis par les clés à puce sont reçus.

11. Système selon la revendication 1, dans lequel le contrôleur (400) est en outre configuré pour authentifier la clé à puce (200) transmettant principalement le signal de réponse de détection et fournir un signal d'ouverture du coffre lorsque des signaux de réponse de détection transmis par la clé à puce sont reçus et les signaux de réponse de détection comprennent les informations de réglage de fonction.
